(19) Europäisches Patentamt
European Patent Office
Office européen des brevets

(11) **EP 0 753 586 A2**

## (12) EUROPEAN PATENT APPLICATION

(43) Date of publication:
15.01.1997 Bulletin 1997/03

(51) Int. Cl.$^6$: **C21C 5/52**, F27D 23/00, F23D 14/32

(21) Application number: 96109300.2

(22) Date of filing: 11.06.1996

(84) Designated Contracting States:
AT BE DE ES FR GB LU SE

(30) Priority: 16.06.1995 IT MI951308
26.10.1995 IT MI952208

(71) Applicants:
• ELTI S.r.l.
24060 Sovere (Bergamo) (IT)

• Dalmine Tubi Industriali S.r.l.
24044 Dalmine, Bergamo (IT)

(72) Inventor: Della Foglia, Ugo
20100 Milano (IT)

(74) Representative: Modiano, Guido, Dr.-Ing. et al
Modiano & Associati S.r.l.
Via Meravigli, 16
20123 Milano (IT)

(54) **Steel production method, particularly for producing steel by means of electric furnaces**

(57)     A method for producing steel, particularly for producing steel with electric furnaces, comprising a step of charging ferrous material in a melting furnace, a melting step during which heat energy is supplied to the ferrous material to raise its temperature to a level that is higher than the melting temperature, and a step of refining the liquid steel produced by the melting of the ferrous material. A simultaneous injection of methane or of another hydrocarbon and of oxygen in the bath of liquid steel is performed, at least during the refining step, in replacement of the coal fines and/or sized coal that are conventionally used.

Fig. 2

## Description

The present invention relates to a method for producing steel, particularly for producing steel by means of electric furnaces.

It is known that the methods currently used to produce steel with electric furnaces generally include a series of sequential operations, respectively a step for charging ferrous material generally constituted by steel scrap, a melting step, during which the ferrous material is melted completely by adding heat energy, and a step for refining the liquid steel produced by the melting of the ferrous material, in which the presence of unwanted substances in the liquid steel bath is reduced by facilitating the bonding of said substances with other substances that are fed into the bath during this step, forming slag on the free surface of the liquid steel bath. Except for the charging Step, the heat energy is supplied to the ferrous material or scrap both by means of the electric arc between the electrodes of the furnace and by using jets of oxygen and oxyfuel burners (i.e., burners supplied with oxygen and fuel).

More particularly, during the melting step, the ferrous material, preheated in the melting furnace by the electric arc and by the burners, is struck by one or more jets of oxygen that are delivered by one or more lances and are appropriately directed onto the ferrous material, so as to achieve quick oxidation, i.e., a highly exothermic reaction, which increases the temperature of the ferrous material, causing it to heat up further and partially melt and therefore collapse onto the bottom of the furnace, where complete melting of the material is then achieved by virtue of the energy produced by the electric arc between the electrodes and the ferrous material.

During this melting step, some plant-related and process-related problems are encountered with currently used methods, which in some cases also include the use of door burners.

As regards the process, a gradual decrease in the effectiveness of the door burner is in fact observed as a consequence of the decrease of the temperature difference between the flame generated by the burner and the temperature of the scrap, and as a consequence of the decrease of the heat exchange surface produced by the partial melting and therefore by the settling of the ferrous material on the bottom of the furnace, and also by the increase in the energy transfer distance, which is also caused by the collapse of the ferrous material as a consequence of its melting.

As regards the plant-related problems, possible clogging of the deslagging door, through which the lance for injecting oxygen and/or the optional door burner are inserted, is observed, entailing the need to provide for frequent maintenance and heavily penalizing the possibilities of lance utilization.

During the refining step, a jet of oxygen and a jet of coal fines are injected into the liquid steel bath by means of one or more injection lances; said jets have the purpose of keeping the liquid bath in constant motion and of facilitating the reactions of the various unwanted substances that are present in the liquid steel and their bonding with the oxygen and carbon, forming foamy slag that floats on the free surface of the liquid steel.

In order to facilitate the formation of foamy slag, in many cases it is necessary to charge pieces of coal in the furnace in addition to injecting coal fines by means of lances.

Process-related and plant-related problems are observed in this step as well.

As regards the process, limited effectiveness is in fact observed when working with oxygen and coal fines; this is essentially due to the inertias of the dissolution of the coal in the liquid steel.

From a plant-related point of view, problems are observed in transporting and maintaining the coal fines in a sufficiently fluid state in order to be able to correctly supply the injection lance or lances.

In addition to these plant-related problems linked to the transport of the coal fines, there are further implications in plant-related terms as well as in terms of environmental impact. Only a certain amount of the injected coal fines in fact actually reaches the liquid steel in the furnace, whereas the remaining part can scatter into the atmosphere, with consequent pollution, or burn in the exhaust gas duct, causing a thermal overload thereof with the extreme consequence of damaging the filters, causing an increase in pollution.

Furthermore, with the methods currently used in the production of steel there are problems as regards the recovery and/or disposal of the substances contained in the exhaust gases.

The processes for producing steel by means of an electric furnace, starting from steel scrap as raw material, in fact lead to the production of large amounts of metallic oxides, caused by the oxidation of the raw material charged into the furnace and by the evaporation and subsequent oxidation of the zinc and non-zinc coatings thereof. These oxides combine with all the particulates that are injected as fines or dust to control the metallurgical process.

In practice, the exhaust gases that leave the electric furnace are essentially constituted by:

-- iron oxides, at the various levels of oxidation of iron, i.e., $Fe_2O_3$, $Fe_3O_4$, $FeO$, respectively from the most highly oxidized to the least oxidized;
-- zinc oxides;
-- lead oxides;
-- calcium and magnesium oxides, added as flux and deslagging agents to control the process.

On the average, the content of these substances in the dust that is collected in the exhaust gas filtration devices is as follows: 45-60% iron oxides; 20-35% calcium and magnesium oxides; 1-18% zinc oxides; 0.01-2.5% lead oxides. Other oxides and various inert substances complete the composition of the dust.

Among all these substances, iron, zinc, and possibly lead are easily recoverable; the other oxides currently cannot be recovered due to various reasons that range from their refractory nature to their excessively low percentage to complete chemical inertness.

The exhaust gas filtration and reduction devices with which every steel production plant is equipped allow to prevent the release of all these substances into the atmosphere and allow to subsequently recover them.

Currently, in order to dispose of this dust, whose production ratio is approximately between 1 and 2% of the production of the melting furnace, it is possible to inertize the dust in appropriate facilities and then dispose it in appropriately equipped landfills. This disposal method is reserved for dust that does not have an appreciable content of recoverable raw materials.

Disposal can also be performed by recovering the useful elements by virtue of processes for chemical or electrochemical enrichment. This solution is reserved for dust that has a sufficiently high content of at least one element. Of course, the lower the value of the element to be recovered, the higher its content must be in the dust to allow recovery to be economically convenient.

Both of these solutions have considerable drawbacks, both from the economic point of view, essentially in relation to the complexity of the facilities, and from the environmental point of view, in relation to the fact of disposing dust and/or treatment agents produced by the recovery process, since in any case said oxides must undergo a preliminary chemical treatment before proceeding with thermal treatments.

In particular, as regards the iron that is contained in the iron oxides and constitutes a raw material adapted for the production of steel, none of the processes for disposing the dust produced by exhaust gas filtration allows its recovery.

The aim of the present invention is to solve the above described problems, providing a method for producing steel, particularly for producing steel with electric furnaces, that allows to achieve high effectiveness, particularly during the refining step.

Within the scope of this aim, an object of the invention is to provide a method that allows to significantly reduce the use of coal in the steel production process.

Another object of the invention is to provide a method that allows to satisfactorily solve the problems concerning the process and the plant which have been described above in relation to conventional processes.

Another object of the invention is to provide a method that allows to also improve the effectiveness of intervention during the melting step.

Another object of the invention is to provide a method that allows to significantly reduce maintenance interventions on electric furnaces for steel production.

Another object of the invention is to provide a method that allows immediate recovery of the iron oxides that are present in the exhaust gases that leave the steel production furnace.

Another object of the invention is to provide a method that allows to enrich, in the exhaust gases that leave the furnace, the content of the oxides that one intends to recover, even for valuable oxides containing chrome, vanadium, nickel, and cadmium, so as to make their recovery in subsequent treatments economically convenient.

Another object of the invention is to provide a method that also allows to recover the scale produced by the milling operations, in order to enrich the iron content of the liquid metal bath.

This aim, these objects, and others that will become apparent hereinafter are achieved by a method for producing steel, particularly for producing steel with electric furnaces, that comprises a step for charging ferrous material in a melting furnace, a melting Step during which heat energy is supplied to the ferrous material to raise its temperature to a level that is higher than the melting temperature, and a step for refining the liquid steel produced by the melting of the ferrous material, characterized in that a simultaneous injection of a hydrocarbon and of oxygen in the bath of liquid steel is performed at least during said refining step.

Further characteristics and advantages of the invention will become apparent from the description of a preferred but not exclusive embodiment of the method according to the invention, which is illustrated hereinafter by way of non-limitative example with reference to the accompanying drawings, wherein:

figure 1 is a chart of the solubility of gas in steel as the temperature varies;
figure 2 is a flowchart of part of the method according to the invention, related to exhaust gas treatment.

The method according to the invention comprises a step for charging the ferrous material, which can be constituted, in a per se known manner, by steel scrap, into a melting furnace, preferably a melting furnace of the electric type. Then the ferrous material is subjected to a melting step, during which heat energy is supplied to the ferrous material to bring its temperature to a level that is higher than the melting temperature.

The supply of heat energy to the ferrous material to cause its complete melting can be performed, in a per se known manner, by means of electrodes arranged inside the furnace.

Then the liquid steel produced by the melting of the ferrous material is subjected to a refining step.

According to the invention, a simultaneous injection of a hydrocarbon, preferably constituted by methane, and of oxygen into the liquid steel bath instead of the coal normally used in the conventional art is performed at least during the refining step.

Conveniently, the ferrous material charged into the furnace is struck with a jet of oxygen and methane or other hydrocarbon during the melting step as well, in order to assist the addition of heat provided by the operation of the electrodes.

The injection of oxygen and of methane or of another hydrocarbon in the furnace is performed by means of one or more injection lances that are appropriately orientated inside the furnace so as to correctly strike the ferrous material during melting and affect the liquid steel bath during refining.

Oxygen injection is performed by means of a supersonic lance, i.e., a lance that is capable of delivering a jet of oxygen at supersonic speed, and methane injection is performed by delivering methane, or another hydrocarbon, at a pressure that is lower than the oxygen injection pressure, inside the supersonic jet of oxygen that is delivered by the lance, thus ensuring the entrainment of the methane or other hydrocarbon used and of the combustion products within the not yet fully melted ferrous material during the melting step and within the steel bath during refining.

The ratio between the amount of methane or other hydrocarbon and the amount of oxygen injected during the refining step and/or during the melting step can vary continuously according to the requirements of the process and is preferably between 0.05 and 1.5.

The injection of methane or of another hydrocarbon and of oxygen in the furnace during melting and/or refining steps can be performed by using the same lance or two separate lances, so that, as mentioned, the jet of methane or other hydrocarbon encounters the supersonic jet of oxygen, which as mentioned has the purpose of entraining the methane or more generally the hydrocarbon and the combustion products produced by the reaction between said oxygen and the methane and subsequently by the oxidation of the various substances that are present in the ferrous material charged in the furnace.

If one analyzes in greater detail the phenomena caused by the injection of oxygen and methane in the furnace, one finds that there are two different phenomena, whose evolution is closely dependent on the operating step of tapping. These two phenomena are constituted respectively by the combustion of the methane or other hydrocarbon and by the combustion of the methane or other hydrocarbon and by the cracking of the molecule thereof into its primary components.

Combustion is a typical phenomenon of the melting step, during which the lance or lances that deliver oxygen and methane are used in practice like a superstoichiometric door burner in the presence of a cold charge, constituted by the ferrous material or by the scrap, and of relatively low temperatures inside the furnace.

With reference to the use of methane, but without being restricted to its use, the resulting energy benefit can be divided into two parts, the first of which is constituted by the oxidation of the methane on the part of the oxygen according to the following combustion reaction:

$$CH_4 + 2O_2 \rightarrow CO_2 + 2H_2O \qquad \Delta H^\circ = -9{,}64 \ KWh/Nm^3$$

In addition to the methane intentionally injected in the furnace by means of the lance or lances, there is also the oxidation of "equivalent methane", in the sense of the amount of oils, fuels, plastics, and impurities that are present on the surface of the scrap and whose content is a function of the type of charge that is used.

The second part of the energy addition is constituted by the reactions for the oxidation of the elements whose affinity for oxygen is greater than, or equal to, that of iron and are contained as alloys in the steel scrap.

As regards this second part, oxidized by the oxygen that is not consumed in the reaction for combustion with the methane, one obtains energy equal to 3-5 kWh.1N cu m $O_2$, expresses the normal pressure and temperature conditions.

This amount of energy, equal to 3-5 kWh, arises from the weighted average of the oxidation reactions of various elements, listed hereafter in the order in which they occur:

$$Si + O_2 \rightarrow SiO_2 \qquad \Delta H^\circ = -8{,}9 \ kWh/kg \ Si$$

$$2C + O_2 \rightarrow 2 \ CO \qquad \Delta H^\circ = -2{,}85 \ kWh/kg \ C$$

$$Mn + \tfrac{1}{2} O_2 \rightarrow MnO \qquad \Delta H^\circ = -1{,}95 \ kWh/kg \ Mn$$

$$Fe + \tfrac{1}{2} O_2 \rightarrow FeO \qquad \Delta H^\circ = -1{,}32 \ kWh/kg \ Fe$$

Together with these elements one must also consider aluminum, which is involuntarily present in the scrap and whose affinity for oxygen is even greater than that of silica, but whose low content in the charge, caused by the fact that it is a valuable scrap that is separated beforehand from the ferrous scrap, make its energy contribution absolutely negligible.

The reason for the variation in the energy equivalence values of oxygen (3-5 kWh) is due to the variability of the various alloyed elements, whose proportion decreases as the amount of injected oxygen increases and therefore, gradually lower energy equivalence values are obtained as tapping continues.

These elements are obviously contained as alloys in the steel that is melted in front of the oxygen and methane jet by the intense addition of the energy caused by the use of the lance or lances as burners, thus allowing to quickly reach the temperatures that are necessary for the triggering of the oxidation reactions to which reference has been made.

The molten steel thus obtained, due to the high impact speed of the jet of oxygen and methane or other hydrocarbon, is finely divided, thus obtaining a large exchange surface and thus contributing to maximize the heat yield of the melting step of the ferrous material.

The molten steel thus superheated therefore further facilitates the melting of the rest of the scrap that is still contained in the furnace in the door region, performing the task of cleaning the deslagging door, through which the injection lance or lances are inserted, and thus allowing early execution of the foamed-slag process.

The combined injection of oxygen and methane or other hydrocarbon during the melting step therefore eliminates the need for the intervention of a conventional door burner, thus reducing the maintenance and equipment burden of this area of the furnace.

The injection of oxygen and methane or other hydrocarbon during the melting step, according to the invention, entails not only advantages from the point of view of the plant but also advantages related to the process.

By virtue of the combined injection of oxygen and methane during this step, one in fact obtains greater effectiveness in the transfer of heat energy to the charged ferrous material or scrap with respect to intervention on the same ferrous material or scrap with conventional door burners.

With conventional burners, during the melting step there is in fact a gradual decrease in efficiency in the transfer of heat energy. This decrease is caused mainly by the decrease in the difference in temperature between the flame of the burner and the scrap that is still present, since the amount of heat is:

$$Q = \frac{h(t)\ A\ \Delta t}{x}$$

where:

-- Q is the amount of transferred heat
-- h(t) is the heat exchange coefficient
-- A is the exchange surface
-- $\Delta t$ is the temperature differential
-- x is the length of the heat transfer path

As the tapping of the ferrous material or scrap advances, the efficiency of the conventional burner, taken as the ratio between the transmitted energy Q and the delivered energy E, decreases because of the decrease of the heat exchange coefficient (an inverse function of the temperature), of the heat exchange surface, since flat bath conditions are approached, and of the temperature differential between the flame and the scrap, whereas the energy transfer distance increases.

If instead, according to the invention, oxygen as a supersonic jet and methane are injected, one observes an improvement in the thermal efficiency of the combustion in this step as well, since said combustion is performed in conditions offering the maximum possible heat exchange surface.

In flat-bath conditions and under a heavy layer of foamed slag, the conventional use of a burner, whether a wall burner or a door burner, entails a reduction in its efficiency down to almost zero, not only because of the above described factors but also because of the higher resistances to heat conduction in a physical sense. The transfer of the heat energy supplied by a burner whose flame develops in the furnace chamber is in fact essentially entrusted to the atmosphere in which the flame develops, and is transmitted by said atmosphere to the slag that is present above the molten steel bath, thus entailing two phase passages and the corresponding efficiencies. By instead using a supersonic jet of oxygen together with methane or another hydrocarbon, according to the invention, combustion essentially occurs within the gas bubbles generated in the bath and in the slag by the impact of the supersonic oxygen jet that entrains the methane or other hydrocarbon, burning inside said bubbles, so that by transferring the combustion inside the bath the heat transfer distance factor assumes the minimum value. The fact that these bubbles are physically present inside the slag and the steel itself maximizes the heat exchange surface, thus maximizing the factor A in the heat transfer equation.

The cracking phenomenon involves the methane or any other hydrocarbon constituted by carbon and hydrogen that is injected, mainly during the refining step, i.e., during the step in which the temperature inside the steel bath is adapted to support this phenomenon, due to the presence, inside the bath, of the hydrocarbon that has not been oxidized by the oxygen or whose oxidation is only partial. The reasons for the failed or partial oxidation of the methane or other hydrocarbon are to be found in the fact that the mixture of which every bubble present in the molten steel bath is composed contains different percentages of methane or other hydrocarbon and oxygen. In particular, with reference to methane but not restrictively thereto, three possibilities can occur:

(1) - Flammable mixture, i.e., a $CH_4$-$O_2$ mixture in which the $CH_4$ content is between 5.1 and 61% by volume, with an excess of oxygen with respect to the stoichiometric amount. In this case, combustion of the methane is complete and there is maximum transfer to the bath of the energy developed by the combustion, which is performed mainly inside the bubbles. Oxygen for the other oxidation reactions that occur inside the molten mass, with the above listed energy contents, remains available.

(2) - Flammable mixture, i.e., a $CH_4$-$O_2$ mixture in which the $CH_4$ content is between 5.1 and 61% by volume, with a deficit of oxygen with respect to the stoichiometric amount. In this case, after completion of the combustion reactions, there is still methane available for the endothermic reactions for the cracking of the molecule into carbon and hydrogen in the molecular state. Due to the high temperatures (above 1500°C), the molecule is broken up further and the hydrogen is available in the atomic state.

(3) - Mixture that is nonflammable because the above mentioned percentages are not reached or are exceeded. mentioned percentages are not reached or are exceeded. Methane and oxygen remain available for the cracking and oxidation reactions respectively.

The enthalpy of the reaction for cracking the methane molecule ($\Delta H^o$) is:

$$CH_4 \rightarrow C + 2H_2 \qquad \Delta H^\circ = 17,89 \text{ Kcal/Mol}$$

with a combustion heat that is equal to:

$$CH_4 + 2O_2 \rightarrow CO_2 + 2H_2O \qquad \Delta H^\circ = -191,86 \text{ Kcal/Mol}$$

The unburnt methane and the available oxygen are in high-solubility conditions inside the steel bath, since the solubility coefficient of gases in steel increases as the temperature rises.

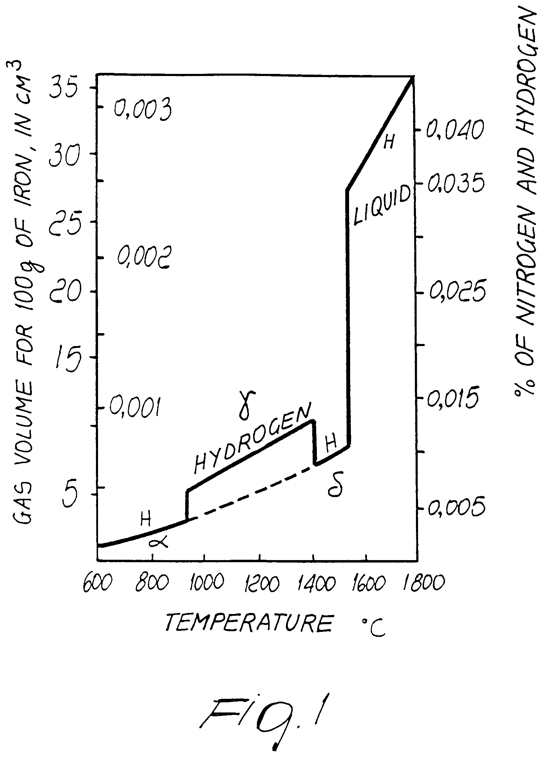

In particular, the methane or other hydrocarbon, already from temperatures on the order of 800°C, is subject to the breakup of its molecule into its elementary components. As a consequence of this reaction, atomic carbon and atomic hydrogen form and dissolve immediately in the liquid steel bath. The chart shown in the accompanying figure 1 provides an adequate representation of solubility in steel both in the solid state and in the liquid phase.

Accordingly, in the liquid steel bath there is the maximum availability of all the elements that are necessary for easy and effective operation of the furnace and of the metallurgical process.

In particular, the carbon originating from the dissociation of the methane is immediately available in the the CO that is normally produced in the refining process is therefore as follows:

$$Fe + \tfrac{1}{2} O_2 \rightarrow FeO$$

$$FeO + C \rightarrow Fe + CO$$

$$C + \tfrac{1}{2} O_2 \rightarrow CO$$

in which the last reaction occurs essentially inside the slag, causing it to expand.

The mechanism seems to be in contrast with the Ulich oxygen affinity table. This contradiction is only apparent; one merely has to consider the availability of iron and oxygen within the bath. Due to the partition law, in the presence of these contents a considerable affinity difference is in fact required for compliance with the Ulich table from the very first step of the process, whereas the table is assuredly followed once the equilibrium position has been reached.

The carbon monoxide thus produced is then used first of all to perform the stirring of the bath, significantly improving its uniformity, minimizing bath stratification risks, and thus decreasing the risk of violent reactions in the furnace by the same extent. Likewise, expansion of the slag in the foamed slag process is assisted exclusively by means of the injection of methane or of another hydrocarbon, without requiring in any way the conventional addition of coal pieces as in conventional processes which entail the addition, by injection or in the bucket, of coal fines or of sized coal, respectively, to achieve the same result. In the conventional process, furthermore, there is a certain inertia, due to the fact that is it necessary to dissolve the carbon, which constitutes approximately 85% of the injected coal, in the steel or in the slag before achieving the desired effect. This inertia is pointed out by the CO emission peaks during the last step of tapping, with conventional methods, when the carbon has dissolved in the bath.

On the other hand, in the method according to the invention 100% of the carbon originating from the hydrocarbon that reaches the bath is immediately available in the form of dissolved atoms, improving the energy addition. The content of iron oxide in the slag can be controlled in a considerably simplified manner with respect to a conventional management of the process, thus allowing improved manageability of foamed slag. The content of this element in the slag must in fact remain within a narrow variation range (20-35%), on penalty of losing the expandability of said slag due to wide viscosity variations.

Another element that arises from cracking of the methane molecules is hydrogen. This element is the prime deoxidizing agent, but its use has been heavily limited up to now due to the danger caused by the risk of explosions and violent and uncontrolled combustions inside the melting furnaces. However, with the method according to the invention the fact that said element is dissolved in the metal bath and is moreover in the atomic form fully eliminates this risk.

In view of the availability of hydrogen in the atomic state, the deoxidizing reaction performed by said hydrogen is possible:

$$FeO + 2H \rightarrow H_2O + Fe$$

with the result of allowing to use an additional factor for controlling the content of iron oxide FeO in the slag. The result of a more effective control over the content of iron oxide in the slag allows operation with contents of this element that are close to the lower limit for slag expandability, reducing its aggressiveness with respect to refractories.

The contaminating effect of hydrogen with respect to steel is substantially fully eliminated in the method according to the invention by the natural development of CO throughout the tapping step, by virtue of the constant availability of carbon inside the bath. The partial pressure law in fact holds inside the bubbles generated by the injection of oxygen and hydrocarbon in the liquid metal bath; according to this law, the system constituted by the molten steel and the bubble tends to an equilibrium, attempting to equalize the partial pressures of the gases everywhere. By virtue of this law, the bubble originally formed exclusively by CO becomes enriched with hydrogen during its travel inside the liquid metal bath, causing it to move away from said liquid metal and thus preventing its enrichment and the consequent drawbacks.

Another advantage that arises from the presence of hydrogen directly above the slag, which generates a constant stream of CO, is the higher combustion rate of the available carbon monoxide, for which the hydrogen acts as catalyst.

The constant availability of carbon and hydrogen to be oxidized within the liquid metal bath allows to adopt, with the method according to the invention, significantly high oxygen injection ratios without however heavily affecting the thermal efficiency of the injection and without having to pay the price of high contents of iron oxides FeO in the slag, which indicate decreases in the yield of the charged ferrous material or scrap. This is possible because, as already mentioned, said elements have a higher affinity for oxygen than iron and are continuously oxidized before said iron.

Advantageously, the method according to the invention also includes a treatment of the metallic oxides that are present in the exhaust gases in order to achieve immediate recovery of the iron oxides that are present in said exhaust gases.

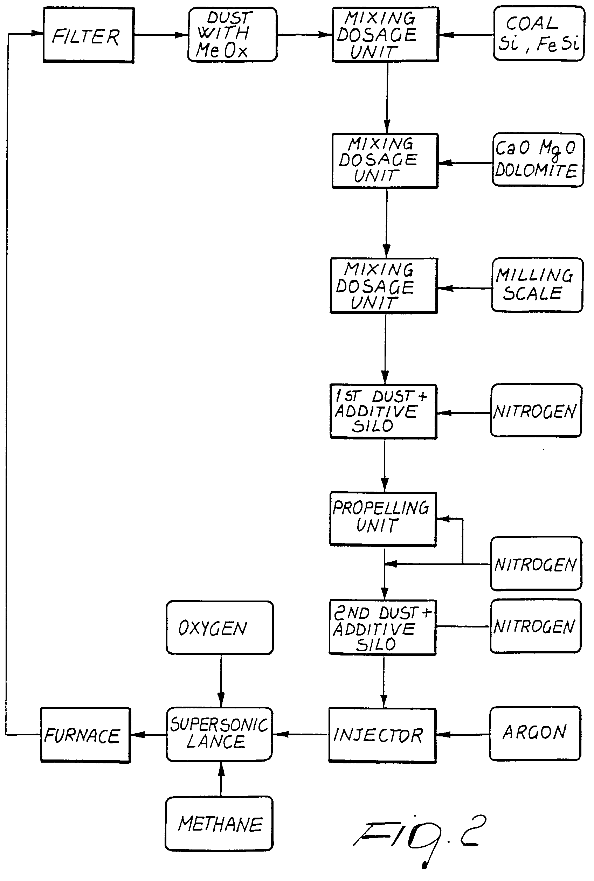

More particularly, the exhaust gas treatment, which can be performed to a large extent with conventional devices, for example of the type used to propel the fines, such as for example coal fines, in steel production plants, comprises, as shown in figure 2, a step for filtering the exhaust gases that leave the furnace, a step for removing the dust produced by filtration of the exhaust gases, which contains, as described above, metallic oxides as well as other oxides and various inert substances derived from flux and deslagging substances introduced in the furnace to control the melting process.

The dust can be collected from the exhaust gases that originate from the furnace for example by means of a bag filter and the dust can be removed for example by means of a screw conveyor that feeds the dust to a first mixing-dosage unit. Inside said mixing-dosage unit, the dust preferably receives the addition of coal dust, or silica or iron-silica, also as dust.

The dust with the addition of coal is transferred from the first mixing-dosage unit to a second mixing-dosage unit, where CaO and/or MgO and/or dolomite are added; these substances have the purpose of improving the melting of the metallic oxides and the subsequent purification of the molten metal.

The dust, together with the corresponding additives, is transferred from the second mixing-dosage unit to a further mixing-dosage unit, by means of which the dust receives an addition, preferably of milling scale.

Then the dust, together with the corresponding additives, is stored in a first silo, where it is fluidized by using a fluidizing agent that is preferably constituted by nitrogen. The fluidizing agent may also be constituted by dehumidified deoiled air.

It should be noted that the dust, together with the corresponding additives, is stored in the first silo while still warm, thus avoiding the packing of the dust due to moisture that would occur if stored when cold. The fluidization performed by introducing nitrogen in the first silo does not in any way increase the moisture content of the dust.

The dust and the additives are then removed from the first silo and transferred to a second silo by means of a conventional propelling device, and propulsion is achieved again by using nitrogen, or dehumidified deoiled air, and nitrogen or dehumidified and de-oiled air is also used for fluidization inside the second silo.

The exhaust gas treatment method also includes a step for injecting the dust, together with the corresponding additives, in the furnace during the melting process together with a jet of oxygen and of a reducing agent.

The dust, the oxygen, and the reducing agent are injected by means of one or more injection lances. In particular, one of the injection lances is fed with the dust and the corresponding additives by means of an injector whose propellant is an inert gas, preferably argon.

Advantageously, the reducing agent that is used during the injection step is obtained from the simultaneous injection in the furnace of oxygen and a hydrocarbon, preferably constituted by methane.

The lance or lances that are used are orientated so that the jet of fluidized dust, the jet of oxygen and the jet of the hydrocarbon must meet.

It should be noted that argon is used as propellant for said injector in order to minimize the risk of the pickup of nitrogen on the part of the liquid steel bath. Furthermore, the use of an inert gas in this step of the process assuredly eliminates the possibility of dangerous and uncontrolled combustion reactions with the hydrocarbon that is used.

The injection of the dust with the corresponding additives, of oxygen, and of a hydrocarbon, preferably methane, inside the furnace through the lance or lances, which preferably uses said methane as dust propellant, produces the following processes.

As regards the metal oxides that have a low melting point, including zinc, lead, and traces of sulfur and vanadium if present, they evaporate due to the high temperatures that are present in the jet and are caused by the combustion of the hydrocarbon with the oxygen, which is preferably injected at a supersonic speed. Exhaust gas collection removes the exhaust gases from the furnace chamber and subsequently cools them. The oxides in the vapor state reach the filter or filters of the system for eliminating exhaust gases in the solid state. Furthermore, their content, in view of the recycling of the dust and of their continuous inflow from the evaporation of the coatings on the surface of the new processed scrap, is constantly increased, making their recovery economical and easy.

As regards iron oxides, it is known that as the complexity of the molecules increases, instability at high temperatures also increases, allowing the spontaneous cracking of the iron molecules at the maximum oxidation level $Fe_2O_3$.

Richardson's chart, which determines the ranges of existence of the various metallic oxides as a function of the temperature and of the content of reducing agents in the gaseous atmosphere, shows that at the temperature

of approximately 1500°C the oxidation reaction of the iron oxide $Fe_2O_3$ according to the reaction

$$6\ Fe_2O_3 \rightarrow 4\ Fe_3O_4 + O_2$$

occurs spontaneously.

It should be noted, as also documented by Richardson's chart, that this dissociation reaction is possible even in the presence of free oxygen. the presence of free oxygen.

The reduction process, at this point, is able to continue, although further reductions are not possible by acting directly on the temperature, by virtue of the methane or other hydrocarbon that is injected in the furnace together with the dust and the oxygen. The coal added to the dust ensures the existence of the reducing atmosphere that is necessary for completion of the reduction reactions.

The partial combustion of the injected hydrocarbon and the cracking of its molecule at high temperatures in fact makes available the reducing agents that are necessary for the purpose, particularly hydrogen and carbon monoxide.

This in fact allows the known reduction reactions:

$$Fe_3O_4 + CO \rightarrow 3\ FeO + CO_2$$

$$Fe_3O_4 + H_2 \rightarrow 3\ FeO + H_2O$$

$$FeO + CO \rightarrow Fe + CO_2$$

$$FeO + H_2 \rightarrow Fe + H_2O$$

to occur in the path between the end of the lance or lances and the molten steel bath, by virtue of the extremely fine particle size of the dust. The pure iron thus obtained is immediately transferred to the metal bath, thus allowing the immediate increase of the yield of the charged steel scrap.

The injection of the dust inside the furnace can be performed throughout the tapping operation.

This allows to use extremely low fines injection ratios

The fact of making the iron available to the metal bath automatically leads to a reduction in the volumes of dust produced, on one hand allowing mixing with the scale that originates from mills and on the other hand promoting early enrichment of the recoverable oxide contents.

The continuous recirculation of the dust collected by the filters on the output duct of the furnace allows to considerably and gradually increase the percentages of the other oxides that can be recovered in the dust, which after a preset number of cycles is removed directly from the filter and sent to subsequent recovery treatments.

In practice it has been observed that the method according to the present invention fully achieves the intended aim, since is allows to obtain, as mentioned above, significant advantages both in terms of efficiency and in terms of simplicity of execution and management of the steel production plant that is used.

Another advantage of the method according to the present invention is that it allows easier control of the aggressiveness of the slag, allowing to achieve significant savings in terms of wear of the refractories of the melting furnace and of the ladles.

The method according to the present invention also allows direct reduction of the iron oxides, with immediate availability of the recovered iron in the bath and recovery of the milling scale, gradually increasing the percentages of the other oxides in the dust that derives from exhaust gas filtration, thus making their recovery economically convenient.

This enrichment can be conveniently dosed so as to allow economically convenient recovery also for valuable oxides, such as for example oxides that contain chrome, vanadium, nickel, and cadmium. Enrichment at will of the content of valuable elements allows to sell the dust as recycled raw material, which as such is no longer a source of expense for its disposal but a source of profit.

The method according to the present invention also allows to use processes having a lower environmental impact to recover said valuable elements, indeed in view of the considerable reduction in the volumes of the materials to be treated.

The method thus conceived is susceptible of numerous modifications and variations, all of which are within the scope of the inventive concept; all the details may furthermore be replaced with other technically equivalent elements.

## Claims

1. A method for producing steel, particularly for producing steel with electric furnaces, comprising a step of charging ferrous material in a melting furnace, a melting step during which heat energy is supplied to the ferrous material to raise its temperature to a level that is higher than the melting temperature, and a step of refining the liquid steel produced by the melting of the ferrous material, characterized in that a simultaneous injection of a hydrocarbon and of oxygen in the bath of liquid steel is performed at least during said refining step.

2. A method according to claim 1, characterized in that during said melting step the ferrous material charged into the furnace is struck with a jet of oxygen and of a hydrocarbon.

3. A method according to claim 2, characterized in that said hydrocarbon is constituted by methane.

4. A method according to claim 2, characterized in that the ratio between the amount of hydrocarbon and the amount of oxygen injected in said furnace in said refinement step and/or in said melting step is substantially between 0.05 and 1.5.

5. A method according to claim 1, characterized in that the injection of oxygen and of said hydrocarbon is performed by injecting a stream of said hydrocarbon inside a supersonic jet of oxygen that is orientated inside said furnace in a direction adapted to strike the charged ferrous material or the liquid steel bath.

6. A method according to claim 5, characterized in that the injection of the stream of said hydrocarbon inside the supersonic jet of oxygen is performed at a pressure that is substantially lower than the injection pressure of the oxygen.

7. A method according to claim 1, characterized in that the injection of oxygen and of said hydrocarbon in the furnace is performed by means of at least one injection lance.

8. A method according to claim 1, further comprising a treatment of the exhaust gases that leave the furnace.

9. A method according to one or more of the preceding claims, characterized in that said treatment of the exhaust gases comprises: a Step of filtering the exhaust gases that leave the furnace, a step of collecting the dust produced by exhaust gas filtration, a step of fluidizing said dust, and a step of injecting said fluidized dust in the furnace during the melting process together with a jet of oxygen and of a reducing agent.

10. A method according to claim 9, characterized in that said reducing agent is obtained from the simultaneous injection of oxygen and of a hydrocarbon in the furnace.

11. A method according to claim 10, characterized in that said hydrocarbon is constituted by methane.

12. A method according to claim 9, characterized in that coal fines are added to said dust prior to said injection step.

13. A method according to claim 9, characterized in that silica fines are added to said dust prior to said injection step.

14. A method according to claim 9, characterized in that iron-silica fines are added to said dust prior to said injection step.

15. A method according to claim 9, characterized in that prior to said injection step, fluxing substances adapted to reduce the melting temperature of the oxides contained in said dust are added to said dust.

16. A method according to claim 15, characterized in that said fluxing substances comprise calcium oxide.

17. A method according to claim 15, characterized in that said fluxing substances comprise magnesium oxide.

18. A method according to claim 15, characterized in that said fluxing substances comprise dolomite.

19. A method according to claim 9, characterized in that said step of injection of said fluidized dust in the furnace during the melting process together with a jet of oxygen and of a reducing agent is performed by virtue of at least one injection lance.

20. A method according to claim 9, characterized in that during said step of injection of said fluidized dust in the furnace during the melting process, the jet of oxygen is injected at supersonic speed.

21. A method according to claim 19, characterized in that the fluidization of said dust upon introduction in said at least one injection lance is performed by using an inert gas as propellant.

22. A method according to claim 19, characterized in that said dust is propelled inside said at least one injection lance by means of said hydrocarbon.

23. A method according to claim 19, characterized in that said inert gas is constituted by argon.

24. A method according to claim 9, characterized in that said dust, after said collecting step and prior to said injection step, is stored and subjected to fluidization by means of nitrogen.

Fig. 1

FILTER → DUST WITH MeOx → MIXING DOSAGE UNIT ← COAL Si, FeSi

MIXING DOSAGE UNIT ← CaO MgO DOLOMITE

MIXING DOSAGE UNIT ← MILLING SCALE

1ST DUST + ADDITIVE SILO ← NITROGEN

PROPELLING UNIT ← NITROGEN

OXYGEN

2ND DUST + ADDITIVE SILO ← NITROGEN

FURNACE ← SUPERSONIC LANCE ← INJECTOR ← ARGON

METHANE

Fig. 2